# EUROPÄISCHE PATENTSCHRIFT

(11) **EP 2 899 823 B1**
(45) Veröffentlichungstag und Bekanntmachung des Hinweises auf die Patenterteilung: **13.06.2018**
(21) Anmeldenummer: 14193267.3
(22) Anmeldetag: 14.11.2014
(51) Int. Cl.: H02H 3/10, H01H 33/70, H01H 33/02

(54) **Elektrische Schutzanordnung für eine Elektroinstallation sowie dazugehöriges Verfahren**
Electrical protection assembly for an electrical installation and corresponding method
Système de protection électrique pour une installation électrique et procédé correspondant

(30) Priorität: 28.01.2014 DE 102014201503
(43) Veröffentlichungstag der Anmeldung: 29.07.2015
(73) Patentinhaber: Siemens Aktiengesellschaft, 80333 München (DE)
(72) Erfinder: Baumann, Mathias, 90513 Zirndorf (DE); Strassburger, Michael, 92266 Ensdorf (DE)

(56) Entgegenhaltungen:
- EP-A1- 0 774 768
- EP-A1- 2 587 513
- WO-A2-2008/112901
- US-A1- 2003 189 804

## Beschreibung

Die vorliegende Erfindung betrifft eine elektrische Schutzanordnung für eine Elektroinstallation mit einer Fehlerstromschutzvorrichtung, die eine Detektionseinrichtung zum Erfassen eines Fehlerstroms und eine Auswerteeinrichtung zum Vergleichen des erfassten Fehlerstroms mit einem Schwellenwert sowie zum Ausgeben eines Auslösesignals, falls der erfasste Fehlerstrom den Schwellenwert überschreitet, aufweist und einen Leistungsschalter, der eine elektrische Erfassungseinrichtung zum Erfassen eines Überstroms und/oder eines Kurzschlusses sowie eine Auslöseeinrichtung zum Auslösen einer Schalteinrichtung, falls die elektrische Erfassungseinrichtung einen Überstrom und/oder einen Kurzschluss erfasst, aufweist. Darüber hinaus betrifft die vorliegende Erfindung ein Verfahren zum Betreiben einer elektrischen Schutzanordnung für eine Elektroinstallation.

Derartige elektrische Schutzanordnungen können beispielsweise in Gebäuden oder in Industrieanlagen verwendet werden. Diese elektrischen Schutzanordnungen können eine Fehlerstromschutzvorrichtung und einen Leistungsschalter umfassen. Fehlerstromschutzvorrichtungen, die beispielsweise als Differenzstromgeräte oder Fehlerstromgeräte ausgebildet sind, bieten in Niederspannungsnetzen einen Fehlerschutz für den Fall, dass die Basisisolierung versagt oder spannungsführende Teile direkt berührt werden. Dadurch werden Schädigungen an Menschen, Sachwerten und Nutztieren verhindert oder reduziert.

Fehlerstromschutzvorrichtungen können an übliche Leistungsschalter angebaut oder als externe, modulare Lösung realisiert werden. Alternativ können die Fehlerstromschutzvorrichtungen auch in Kompaktleistungsschalter integriert sein. Tritt im Betrieb einer Anlage dann ein Fehlerstrom auf, wird dieser durch die Fehlerstromschutzvorrichtung detektiert, und sie löst den zuständigen (Kompakt-) Leistungsschalter aus und schaltet somit die Anlage spannungsfrei.

Bei speziellen Arten von Fehlerstromschutzvorrichtungen sind als Auslöseeinrichtung sogenannte Hilfsauslöser vorgesehen. Diese Hilfsauslöser sind elektromechanische Systeme, insbesondere auf Magnetbasis, mit denen aus einem Ansteuersignal in Folge eines Fehlerstroms eine Bewegung, insbesondere für ein Schaltschloss, erzeugt werden kann. Im speziellen Fall kann ein Hilfsauslöser auch als Auslösemagnet bezeichnet werden. Je nach Funktion unterscheidet man bei den Hilfsauslösern zwischen Spannungsauslösern und Unterspannungsauslösern. Spannungsauslöser lösen aus (d.h. erzeugen eine mechanische Bewegung), wenn eine Spannungsschwelle überschritten wird. Unterspannungsauslöser lösen aus, wenn eine Spannungsschwelle unterschritten wird.

Die Fehlerstromschutzvorrichtung und der Leistungsschalter sind üblicherweise in separaten Gehäusen angeordnet. Der Leistungsschalter kann ein Gehäuse besitzen, in dem eine oder mehrere Zubehörtaschen vorgesehen sind. In eine solche Zubehörtasche kann der oben erwähnte Hilfsauslöser, ein Hilfsschalter, ein Alarmschalter oder dergleichen eingesteckt werden. Mit diesem modularen Zubehör ist also eine elektrische Schutzanordnung, die einen Leistungsschalter und eine Fehlerstromschutzvorrichtung umfassen kann, individualisierbar.

Bei den bisherigen Lösungen löst die Fehlerstromschutzvorrichtung bzw. das Differenzstromgerät im Falle eines Fehlerstroms entweder über einen Auslösemagnet (mit Hilfe eines Stößels), der in dem Differenzstromgerät integriert ist, oder über einen separaten Auslösemagneten (Spannungsauslöser), der in die Zubehörtasche des Kompaktleistungsschalters eingebaut wird, den Kompaktleistungsschalter aus.

Hierzu beschreibt die US 2003/0189804 A1 eine elektrische Schutzanordnung für eine Elektroinstallation, welche Sensoren zum Erfassen eines Fehlerstroms aufweist. Zudem sind Mittel vorgesehen, welche Schalter auslösen, falls der Fehlerstrom einen Schwellenwert überschreitet. Ferner ist ein Detektor zum Erkennen eines Überstroms vorgesehen. Falls ein Überstrom erkannt wird, können ebenfalls die Schalter ausgelöst werden.

Ferner zeigt die WO 2008/112901 A2 eine elektrische Anordnung zum Schutz vor Überstrom und Fehlerströmen. Die elektrische Anordnung umfasst eine Fehlerstromschutzvorrichtung und einen Leistungsschalter. Dabei ist es vorgesehen, dass die Fehlerstromschutzvorrichtung ein Auslösesignal an eine Auslöseeinrichtung des Leistungsschalters abgeben kann.

Es ist Aufgabe der vorliegenden Erfindung, eine elektrische Schutzanordnung, die eine Fehlerstromschutzvorrichtung und einen Leistungsschalter umfasst, bereitzustellen, die kostengünstiger und bauraumsparender ausgebildet ist.

Diese Aufgabe wird durch eine elektrische Schutzanordnung mit den Merkmalen des Patentanspruchs 1 sowie durch ein Verfahren mit den Merkmalen des Patentanspruchs 6 gelöst. Vorteilhafte Weiterbildungen der vorliegenden Erfindung sind Gegenstand der abhängigen Ansprüche.

Die erfindungsgemäße elektrische Schutzanordnung für eine Elektroinstallation umfasst eine Fehlerstromschutzvorrichtung, die eine Detektionseinrichtung zum Erfassen eines Fehlerstroms und eine Auswerteeinrichtung zum Vergleichen des erfassten Fehlerstroms mit einem Schwellenwert sowie zum Ausgeben eines Auslösesignals, falls der erfasste Fehlerstrom den Schwellenwert überschreitet, aufweist und einen Leistungsschalter, der eine elektrische Erfassungseinrichtung zum Erfassen eines Überstroms und/oder eines Kurzschlusses sowie eine Auslöseeinrichtung zum Auslösen einer Schalteinrichtung, falls die elektrische Erfassungseinrichtung einen Überstrom und/oder einen Kurzschluss erfasst, aufweist, wobei die Fehlerstromschutzvorrichtung dazu ausgebildet ist, das Auslösesignal an die Auslöseeinrichtung des Leistungsschalters zu übertragen, in Folge dessen diese die Schalteinrichtung auslöst.

Die elektrische Schutzanordnung umfasst eine Fehlerstromschutzvorrichtung und einen Leistungsschalter. Die Fehlerstromschutzvorrichtung umfasst wiederum eine Detektionseinrichtung mit der ein Fehlerstrom erfasst werden kann. Diese Detektionseinrichtung kann beispielsweise als Summenstromwandler ausgebildet sein. Darüber hinaus umfasst die Fehlerstromschutzvorrichtung eine Auswerteeinrichtung, also eine entsprechende Auswerteelektronik, die den erfassten Fehlerstrom mit einem Schwellenwert vergleichen kann. Falls der erfasste Fehlerstrom den vorbestimmten Schwellenwert überschreitet, wird ein Auslösesignal mittels der Auswerteeinrichtung ausgegeben. Der Leistungsschalter umfasst eine elektrische Erfassungseinrichtung, die auch als Electronic Trip Unit (ETU) bezeichnet werden kann. Diese elektrische Erfassungseinrichtung kann einen entsprechenden Stromwandler umfassen, mit dem die elektrischen Spannungen und die elektrischen Stromstärken in den Leitungen der Elektroinstallation überwacht werden können. Des Weiteren umfasst der Leistungsschalter eine Auslöseeinrichtung, die für den Fall, dass mit der elektrischen Erfassungseinrichtung ein Überstrom und/oder ein Kurzschluss erfasst werden, eine Schalteinrichtung bzw. ein Schaltschloss auslöst. In Folge dessen werden die elektrischen Leitungen der Elektroninstallation galvanisch getrennt.

Gemäß der vorliegenden Erfindung ist die Fehlerstromschutzvorrichtung dazu ausgebildet, das Auslösesignal, das von der Auswerteeinrichtung der Fehlerstromschutzvorrichtung im Falle eines Fehlerstroms bereitgestellt wird, an die Auslöseeinrichtung des Leistungsschalters zu übertragen. Wenn das Auslösesignal an die Auslöseeinrichtung des Leistungsschalters übertragen wird, wird die mit der Auslöseeinrichtung verbundene Schalteinrichtung ausgelöst. Damit kann die Elektroninstallation spannungsfrei geschaltet werden. Somit bedarf es keines zusätzlichen Auslösemagneten, der in die Fehlerstromschutzvorrichtung integriert werden muss. Auf diese Weise kann eine bauraumsparende elektrische Schutzanordnung bereitgestellt werden. Überdies können Kosten eingespart werden, da für die Fehlerstromschutzvorrichtung eine eigene Auslöseeinrichtung bereitgestellt werden muss.

Zudem ist die Fehlerstromschutzvorrichtung mit der Auslöseeinrichtung des Leistungsschalters mittels eines Kabels elektrisch verbunden. Auf diese Weise kann das Auslösesignal, das von der Fehlerstromschutzvorrichtung bereitgestellt wird, auf einfache Weise an die Auslöseeinrichtung des Leistungsschalters übertragen werden. Durch das Kabel werden keine Einschränkungen vorgegeben, wie die Fehlerstromschutzvorrichtung zu dem Leistungsschalter angeordnet werden kann. Somit kann eine flexible und einfache Lösung bei dem Aufbau einer elektrischen Schutzanordnung bereitgestellt werden.

Ferner weisen die Fehlerstromschutzvorrichtung ein erstes elektrisches Kontaktelement zum Anschließen des Kabels und die Auslöseeinrichtung ein vom ersten elektrischen Kontaktelement verschiedenes zweites elektrisches Kontaktelement zum Anschließen des Kabels auf. Mit anderen Worten weisen die Fehlerstromschutzvorrichtung und die Auslöseeinrichtung zwei unterschiedliche Kontaktelemente auf, die entweder als Stecker oder als Buchse ausgebildet sein können. Zudem kann das Kabel entsprechende Anschlusselemente aufweisen, die zu den jeweiligen elektrischen Kontaktelementen passend ausgebildet sind. Somit kann eine elektrische Verbindung zwischen der Fehlerstromschutzvorrichtung und der Auslöseeinrichtung mit einem Verpolungsschutz bereitgestellt werden. Darüber hinaus ist es denkbar, dass das Kabel entsprechend beschriftet ist.

Des Weiteren weist die Fehlerstromschutzvorrichtung und/oder die Auslöseeinrichtung eine Überwachungseinheit zum Überwachen einer elektrischen Verbindung zwischen dem ersten Kontaktelement und dem Kabel und/oder einer elektrischen Verbindung zwischen dem zweiten Kontaktelement und dem Kabel auf. Somit kann mittels einer Überwachungseinheit, die entweder in der Fehlerstromschutzvorrichtung, der Auslöseeinrichtung oder sowohl in der Fehlerstromschutzvorrichtung als auch in der Auslöseeinrichtung angeordnet ist, auf einfache Weise festgestellt werden, ob die Fehlerstromschutzvorrichtung zum Übertragen des Auslösesignals mittels der Auslöseeinrichtung des Leistungsschalters verbunden ist. Falls die Datenverbindung zwischen der Fehlerstromschutzvorrichtung und der Auslöseeinrichtung nicht besteht, kann beispielsweise ein entsprechendes Warnsignal ausgegeben werden. Somit kann ein sicherer Betrieb der elektrischen Schutzanordnung garantiert werden.

In einer weiteren Ausgestaltung ist das Kabel als Datenbus ausgebildet. Hierbei ist es auch denkbar, dass die Fehlerstromschutzvorrichtung bzw. die Auswerteeinrichtung der Fehlerstromschutzvorrichtung dazu ausgebildet ist, das Auslösesignal in Form eines digitalen Signals, das über einen Datenbus übertragen werden kann, bereitzustellen. Dies bietet zudem den Vorteil, dass das Auslösesignal in der digitalen Form beispielsweise einem Kommunikationssystem bereitgestellt werden kann.

Bevorzugt sind die Fehlerstromschutzvorrichtung und der Leistungsschalter jeweils in einem separaten Gehäuse angeordnet. Auf diese Weise können die Fehlerstromschutzvorrichtung und der Leistungsschalter, beispielsweise in einem Schaltschrank, beliebig zueinander positioniert werden. Auf diese Weise wird eine modulare Lösung für eine elektrische Schutzanordnung bereitgestellt.

Bevorzugt sind das Gehäuse der Fehlerstromschutzvorrichtung und das Gehäuse des Leistungsschalters formschlüssig miteinander verbindbar. Beispielsweise können die beiden Gehäuse durch Steckverbindungen oder dergleichen verbunden werden. Auf diese Weise können die Fehlerstromschutzvorrichtung der Leistungsschalter einfach kombiniert werden.

In einer weiteren Ausführungsform ist die Auslöseeinrichtung als Spannungsauslöser ausgebildet. Alternativ dazu kann die Auslöseeinrichtung als Unterspannungsauslöser ausgebildet sein. Auf diese Weise kann ein sicherer Betrieb der elektrischen Schutzanordnung garantiert werden.

Das erfindungsgemäße Verfahren zum Betreiben einer elektrischen Schutzanordnung für eine Elektroninstallation umfasst das Erfassen eines Fehlerstroms mit einer Detektionseinrichtung einer Fehlerstromschutzvorrichtung, das Vergleichen des erfassten Fehlerstroms mit einem Schwellenwert mit einer Auswerteeinrichtung der Fehlerstromschutzvorrichtung, das Ausgeben eines Auslösesignals, falls der erfasste Fehlerstrom den Schwellenwert überschreitet mit der Auswerteeinrichtung, das Erfassen eines Überstroms und/oder eines Kurzschlusses mit einer elektrischen Erfassungseinrichtung eines Leistungsschalters und das Auslösen einer Schalteinrichtung, falls mit der elektrischen Erfassungseinrichtung ein Überstrom und/oder ein Kurzschluss erfasst wird, mit der Auslöseeinrichtung, wobei das Auslösesignal von der Fehlerstromschutzvorrichtung an die Auslöseeinrichtung des Leistungsschalters übertragen wird, in Folge dessen die Schalteinrichtung ausgelöst wird, wobei die Fehlerstromschutzvorrichtung mit der Auslöseeinrichtung des Leistungsschalters mittels eines Kabels elektrisch verbunden ist. Des Weiteren weisen die Fehlerstromschutzvorrichtung ein erstes elektrisches Kontaktelement zum Anschließen des Kabels und die Auslöseeinrichtung ein vom ersten elektrischen Kontaktelement verschiedenes zweites elektrisches Kontaktelement zum Anschließen des Kabels auf. Zudem wird eine elektrische Verbindung zwischen dem ersten Kontaktelement und dem Kabel und/oder eine elektrische Verbindung zwischen dem zweiten Kontaktelement und dem Kabel mit einer Überwachungseinheit der Fehlerstromschutzvorrichtung und/oder der Auslöseeinrichtung überwacht.

Die zuvor im Zusammenhang mit der erfindungsgemäßen elektrischen Schutzanordnung beschriebenen Vorteile und Weiterbildungen gelten sinngemäß für das erfindungsgemäße Verfahren.

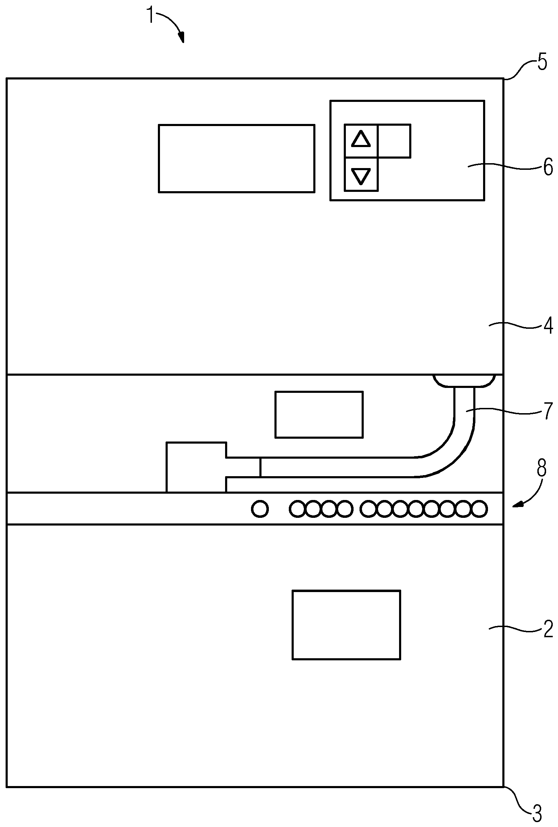

Die vorliegende Erfindung wird nun anhand der beigefügten Zeichnung näher erläutert. Dabei zeigt die Figur eine schematische Darstellung einer elektrischen Schutzanordnung, die eine Fehlerstromschutzvorrichtung und einen Leistungsschalter umfasst.

Das nachfolgend näher geschilderte Ausführungsbeispiel stellt eine bevorzugte Ausführungsform der vorliegenden Erfindung dar.

Die vorliegend in der Figur schematisch dargestellte elektrische Schutzanordnung 1 umfasst eine Fehlerstromschutzvorrichtung 2, die auch als RCD (Residual Current Protective Device) bezeichnet werden kann. Die Fehlerstromschutzvorrichtung 2 kann ein Differenzstromgerät bzw. ein Fehlerstromschutzgerät der bekannten Bauart sein. Dabei weist die Fehlerstromschutzvorrichtung 2, wie sie exemplarisch in der Figur dargestellt ist, ein Gehäuse 3 auf. Darüber hinaus umfasst die elektrische Schutzanordnung 1 einen Leistungsschalter 4 der in einem separaten Gehäuse 5 angeordnet ist. Das Gehäuse 3 der Fehlerstromschutzvorrichtung 2 und das Gehäuse 5 des Leistungsschalters 4 können formschlüssig miteinander verbunden werden. Typischerweise sind die Fehlerstromschutzvorrichtung 2 und der Leistungsschalter 4 in Schaltschränken untergebracht, wo sie an die entsprechenden Stromschienen angeschlossen sind.

Der Leistungsschalter 4 kann auch als Hauptschalter bezeichnet werden und dient zum Schalten von Strömen und Spannungen, wie sie beispielsweise in Produktionsanlagen, Wohngebäuden und dergleichen möglich sind. Der Leistungsschalter 4 umfasst üblicherweise eine hier nicht näher dargestellte elektrische Erfassungseinrichtung, die auch als ETU (Electronic Trip Unit) bezeichnet werden kann. Die elektrische Erfassungseinrichtung kann einen Stromwandler umfassen, mit dem Spannungen und elektrische Stromstärken in den elektrischen Leitungen erfasst werden können. Aus den Spannungen und/oder den Stromstärken kann ermittelt werden, ob ein Überstrom oder ein Kurzschluss vorliegt. Darüber hinaus umfasst der Leistungsschalter 4 eine Auslöseeinrichtung 6, die vorliegend nur schematisch dargestellt ist. Mit der Auslöseeinrichtung 6 kann eine Schalteinrichtung des Leistungsschalters 4 ausgelöst werden, falls mit der elektrischen Erfassungseinrichtung ein Überstrom und/oder ein Kurzschluss erfasst worden ist.

Die Fehlerstromschutzvorrichtung 2 umfasst hier eine nicht dargestellte Detektionseinrichtung, die in der Lage ist, einen Fehlerstrom oder einen Differenzstrom in der Elektroinstallation bzw. in dem Netz zu detektieren. Bei der Detektionseinrichtung handelt es sich beispielsweise um ein Differenzstromschutzgerät oder ein Fehlerstromschutzgerät. Die Detektionseinrichtung umfasst einen Summenstromwandler, dessen Ausgangssignal von null verschieden ist, wenn ein Fehlerstrom oder ein Differenzstrom vorliegt. Das Ausgangssignal des Summenstromwandlers wird einer Recheneinheit der Fehlerstromschutzvorrichtung 2 zugeführt, mit der das Ausgangssignal mit einem Schwellenwert verglichen wird. Falls der Schwellenwert überschritten wird, wird ein entsprechendes Auslösesignal ausgegeben.

Vorliegend ist die Fehlerstromschutzvorrichtung 2 bzw. deren Auswerteeinrichtung über ein Kabel 7 mit der Auslöseeinrichtung 6 des Leistungsschalters 4 elektrisch verbunden. Über das Kabel 7 kann das Auslösesignal von der Fehlerstromschutzvorrichtung 2 zu der Auslöseeinrichtung 6 des Leistungsschalters 4 übertragen werden. Wenn die Auslöseeinrichtung 6 des Leistungsschalters 4 das Auslösesignal von der Fehlerstromschutzvorrichtung 2 empfängt, wird der Leistungsschalter 4 bzw. eine Schalteinrichtung des Leistungsschalters 4 ausgelöst. Dadurch wird die Elektroninstallation bzw. das Netz spannungsfrei geschaltet.

Dabei ist es auch denkbar, dass das Kabel 7 als Datenbus ausgebildet ist und die Fehlerstromschutzvorrichtung 2 bzw. deren Auswerteeinrichtung das Auslösesignal in digitaler Form an die Auslöseeinrichtung 6 des Leistungsschalters 4 überträgt. Das Kabel 7 bzw. die dazugehörigen elektrischen Kontaktelemente an der Auslöseeinrichtung und an der Fehlerstromschutzvorrichtung können verpolsicher ausgebildet sein. Darüber hinaus kann auf dem Kabel 7 eine entsprechende Beschriftung vorgesehen sein, die den richtigen Anschluss des Kabels 7 an der Fehlerstromschutzvorrichtung 2 und an der Auslöseeinrichtung 6 kennzeichnet.

Die Fehlerstromschutzvorrichtung 2 und/oder der Leistungsschalter 4 umfassen eine Überwachungseinheit, mit der erfasst werden kann, dass das Kabel 7 einerseits mit der Fehlerstromschutzvorrichtung 2 und andererseits mit dem Leistungsschalter 4 bzw. der Auslöseeinrichtung 6 verbunden ist. Wenn das Kabel 7 beispielsweise nicht korrekt mit der Fehlerstromschutzvorrichtung 2 oder dem Leistungsschalter 4 verbunden ist, kann ein Warnsignal ausgegeben werden. Dies kann beispielsweise an einer Anzeigeeinheit 8 der Fehlerstromschutzvorrichtung 2 erfolgen. An der Anzeigeeinheit 8, die mehrere Leuchtelemente umfasst, kann beispielsweise auch ein entsprechendes Signal ausgegeben werden, falls mit der Fehlerstromschutzvorrichtung 2 ein Fehlerstrom erfasst wird.

Dadurch, dass die Fehlerstromschutzvorrichtung 2 die Auslöseeinrichtung 6 des Leistungsschalters 4 nutzt, bedarf es keiner zusätzlichen Auslöseeinrichtung für die Fehlerstromschutzvorrichtung 2. Damit können Kosten eingespart werden. Darüber hinaus besteht keine Belegung von Zubehörtaschen, die beispielsweise in dem Gehäuse 5 des Leistungsschalters 4 angeordnet sein können. Somit können von dem Kunden der elektrischen Schutzanordnung 1 weitere Zubehörkomponenten in die Zubehörtaschen integriert werden.

## Patentansprüche

1. Elektrische Schutzanordnung (1) für eine Elektroinstallation mit
- einer Fehlerstromschutzvorrichtung (2), die eine Detektionseinrichtung zum Erfassen eines Fehlerstroms und eine Auswerteeinrichtung zum Vergleichen des erfassten Fehlerstroms mit einem Schwellenwert sowie zum Ausgeben eines Auslösesignals, falls der erfasste Fehlerstrom den Schwellenwert überschreitet, aufweist und
- einem Leistungsschalter (4), der eine elektrische Erfassungseinrichtung zum Erfassen eines Überstroms und/oder eines Kurzschlusses sowie eine Auslöseeinrichtung (6) zum Auslösen einer Schalteinrichtung, falls die elektrische Erfassungseinrichtung einen Überstrom und/oder einen Kurzschluss erfasst, aufweist, wobei
- die Fehlerstromschutzvorrichtung (2) dazu ausgebildet ist, das Auslösesignal an die Auslöseeinrichtung des Leistungsschalters (4) zu übertragen, in Folge dessen diese die Schalteinrichtung auslöst und wobei
- die Fehlerstromschutzvorrichtung (2) mit der Auslöseeinrichtung (6) des Leistungsschalters (4) mittels eines Kabels (7) elektrisch verbunden ist,
**dadurch gekennzeichnet, dass**
- die Fehlerstromschutzvorrichtung (2) ein erstes elektrisches Kontaktelement zum Anschließen des Kabels (7) und die Auslöseeinrichtung (6) ein vom ersten elektrischen Kontaktelement verschiedenes zweites elektrisches Kontaktelement zum Anschließen des Kabels (7) aufweisen und
- die Fehlerstromschutzvorrichtung (2) und/oder die Auslöseeinrichtung (6) eine Überwachungseinheit zum Überwachen einer elektrischen Verbindung zwischen dem ersten Kontaktelement und dem Kabel (7) und/oder einer elektrischen Verbindung zwischen dem zweiten Kontaktelement und dem Kabel (7) aufweist.

2. Elektrische Schutzanordnung (1) nach Anspruch 1, wobei das Kabel (7) als Datenbus ausgebildet ist.

3. Elektrische Schutzanordnung (1) nach einem der vorhergehenden Ansprüche, wobei die Fehlerstromschutzvorrichtung (2) und der Leistungsschalter (4) jeweils in einem separaten Gehäuse (3, 5) angeordnet sind.

4. Elektrische Schutzanordnung (1) nach Anspruch 3, wobei das Gehäuse (3) der Fehlerstromschutzvorrichtung (2) und das Gehäuse (5) des Leistungsschalters (4) formschlüssig miteinander verbindbar sind.

5. Elektrische Schutzanordnung (1) nach einem der vorhergehenden Ansprüche, wobei die Auslöseeinrichtung (6) als Spannungsauslöser ausgebildet ist.

6. Verfahren zum Betreiben einer elektrischen Schutzanordnung (1) für eine Elektroinstallation durch
- Erfassen eines Fehlerstroms mit einer Detektionseinrichtung einer Fehlerstromschutzvorrichtung (2),
- Vergleichen des erfassten Fehlerstroms mit einem Schwellenwert mit einer Auswerteeinrichtung der Fehlerstromschutzvorrichtung,
- Ausgeben eines Auslösesignals, falls der erfasste Fehlerstrom den Schwellenwert überschreitet, mit der Auswerteeinrichtung,
- Erfassen eines Überstroms und/oder eines Kurzschlusses mit einer elektrischen Erfassungseinrichtung eines Leistungsschalter (4) und
- Auslösen einer Schalteinrichtung, falls mit der elektrischen Erfassungseinrichtung ein Überstrom und/oder ein Kurzschluss erfasst wird, mit der Auslöseeinrichtung (6), wobei
- das Auslösesignal von der Fehlerstromschutzvorrichtung (2) an die Auslöseeinrichtung (6) des Leistungsschalters übertragen wird, in Folge dessen die Schalteinrichtung auslöst wird, wobei die Fehlerstromschutzvorrichtung (2) mit der Auslöseeinrichtung (6) des Leistungsschalters (4) mittels eines Kabels (7) elektrisch verbunden ist,
**dadurch gekennzeichnet, dass**
- die Fehlerstromschutzvorrichtung (2) ein erstes elektrisches Kontaktelement zum Anschließen des Kabels (7) und die Auslöseeinrichtung (6) ein vom ersten elektrischen Kontaktelement verschiedenes zweites elektrisches Kontaktelement zum Anschließen des Kabels (7) aufweisen und
- eine elektrische Verbindung zwischen dem ersten Kontaktelement und dem Kabel (7) und/oder eine elektrische Verbindung zwischen dem zweiten Kontaktelement und dem Kabel (7) mit einer Überwachungseinheit der Fehlerstromschutzvorrichtung (2) und/oder der Auslöseeinrichtung (6) überwacht wird.

## Claims

1. Electrical protective arrangement (1) for an electrical installation having
- a fault current protection apparatus (2) that has a detection device for sensing a fault current and an evaluation device for comparing the sensed fault current with a threshold value and for outputting a tripping signal if the sensed fault current exceeds the threshold value, and
- a power switch (4) that has an electrical sensing device for sensing an overcurrent and/or a short circuit and a tripping device (6) for tripping a switching device if the electrical sensing device senses an overcurrent and/or a short circuit, wherein
- the fault current protection apparatus (2) is designed to transmit the tripping signal to the tripping device of the power switch (4), as a result of which said tripping device trips the switching device and wherein
- the fault current protection apparatus (2) is electrically connected to the tripping device (6) of the power switch (4) by means of a cable (7),
**characterized in that**
- the fault current protection apparatus (2) has a first electrical contact element for connecting the cable (7) and the tripping device (6) has a second electrical contact element, which is different from the first electrical contact element, for connecting the cable (7) and
- the fault current protection apparatus (2) and/or the tripping device (6) has a monitoring unit for monitoring an electrical connection between the first contact element and the cable (7) and/or an electrical connection between the second contact element and the cable (7).

2. Electrical protective arrangement (1) according to Claim 1, wherein the cable (7) is designed as a databus.

3. Electrical protective arrangement (1) according to either of the preceding claims, wherein the fault current protection apparatus (2) and the power switch (4) are each arranged in a separate housing (3, 5).

4. Electrical protective arrangement (1) according to Claim 3, wherein the housing (3) of the fault current protection apparatus (2) and the housing (5) of the power switch (4) can be connected to one another in a form-fitting manner.

5. Electrical protective arrangement (1) according to one of the preceding claims, wherein the tripping device (6) is designed as a voltage trip.

6. Method for operating an electrical protective arrangement (1) for an electrical installation by
- sensing a fault current using a detection device of a fault current protection apparatus (2),
- comparing the sensed fault current with a threshold value using an evaluation device of the fault current protection apparatus,
- outputting a tripping signal if the sensed fault current exceeds the threshold value using the evaluation device,
- sensing an overcurrent and/or a short circuit using an electrical sensing device of a power switch (4) and
- tripping a switching device using the tripping device (6) if an overcurrent and/or a short circuit is sensed using the electrical sensing device,
wherein
- the tripping signal is transmitted from the fault current protection apparatus (2) to the tripping device (6) of the power switch, as a result of which the switching device is tripped, wherein the fault current protection apparatus (2) is electrically connected to the tripping device (6) of the power switch (4) by means of a cable (7),
**characterized in that**
- the fault current protection apparatus (2) has a first electrical contact element for connecting the cable (7) and the tripping device (6) has a second electrical contact element, which is different from the first electrical contact element, for connecting the cable (7) and
- an electrical connection between the first contact element and the cable (7) and/or an electrical connection between the second contact element and the cable (7) is monitored using a monitoring unit of the fault current protection apparatus (2) and/or the tripping device (6).

## Revendications

1. Ensemble de protection électrique (1) pour une installation électrique avec
- un dispositif de protection contre le courant de défaut (2) qui présente un système de détection en vue de la détection d'un courant de défaut et un système d'évaluation en vue de la comparaison du courant de défaut détecté avec une valeur seuil ainsi qu'en vue de l'émission un signal de déclenchement dans le cas où le courant de défaut détecté dépasse la valeur seuil, et
- un disjoncteur de puissance (4) qui présente un système de détection en vue de la détection d'une surintensité de courant et/ou d'un court-circuit ainsi qu'un système de déclenchement (6) en vue du déclenchement d'un système de commutation, dans le cas où le système de détection électrique détecte une surintensité de courant et/ou un court-circuit, dans lequel
- le dispositif de protection contre le courant de défaut (2) est réalisé de manière à transférer le signal de déclenchement au système de déclenchement du disjoncteur de puissance (4), suite à quoi il déclenche le système de commutation et dans lequel
- le dispositif de protection contre le courant de défaut (2) est relié électriquement au système de déclenchement (6) du disjoncteur de puissance (4) au moyen d'un câble (7), **caractérisé en ce que**
- le dispositif de protection contre le courant de défaut (2) présente un premier élément de contact électrique en vue du raccordement du câble (7) et le système de déclenchement (6) présente un deuxième élément de contact électrique différent du premier élément de contact électrique en vue du raccordement du câble (7) et
- le dispositif de protection contre le courant de défaut (2) et/ou le système de déclenchement (6) présentent une unité de surveillance en vue de la surveillance d'une liaison électrique entre le premier élément de contact et le câble (7) et/ou d'une liaison électrique entre le deuxième élément de contact et le câble (7).

2. Ensemble de protection électrique (1) selon la revendication 1, dans lequel le câble (7) est réalisé en tant que bus de données.

3. Ensemble de protection électrique (1) selon l'une des revendications précédentes, dans lequel le dispositif de protection contre le courant de défaut (2) et le disjoncteur de puissance (4) sont disposés respectivement dans un boîtier séparé (3, 5).

4. Ensemble de protection électrique (1) selon la revendication 3, dans lequel le boîtier (3) du dispositif de protection contre le courant de défaut (2) et le boîtier (5) du disjoncteur de puissance (4) peuvent être reliés l'un à l'autre par complémentarité de formes.

5. Ensemble de protection électrique (1) selon l'une des revendications précédentes, dans lequel le système de déclenchement (6) est réalisé en tant que déclencheur de tension.

6. Procédé en vue de l'exploitation d'un ensemble de protection électrique (1) pour une installation électrique par le biais
- de la détection d'un courant de défaut avec un système de détection d'un dispositif de protection contre le courant de défaut (2),
- de la comparaison du courant de défaut détecté avec une valeur seuil avec un système d'évaluation du dispositif de protection contre le courant de défaut,
- de l'émission d'un signal de déclenchement, dans le cas où le courant de défaut détecté dépasse la valeur seuil, avec le système d'évaluation,
- de la détection d'une surintensité de courant et/ou d'un court-circuit avec un système de détection électrique d'un disjoncteur de puissance (4) et
- du déclenchement d'un système de commutation, dans le cas où une surintensité de courant et/ou un court-circuit sont détectés avec le système de détection électrique, avec le système de déclenchement (6),
dans lequel
- le signal de déclenchement est transféré au système de déclenchement (6) du disjoncteur de puissance par le dispositif de protection contre le courant de défaut (2), moyennant quoi le système de commutation est déclenché, dans lequel le dispositif de protection contre le courant de défaut (2) est relié électriquement au système de déclenchement (6) du disjoncteur de puissance (4) au moyen d'un câble (7), **caractérisé en ce que**
- le dispositif de protection contre le courant de défaut (2) présente un premier élément de contact électrique en vue du raccordement du câble (7) et le système de déclenchement (6) présente un deuxième élément de contact électrique différent du premier élément de contact électrique en vue du raccordement du câble (7) et
- une liaison électrique entre le premier élément de contact et le câble (7) et/ou une liaison électrique entre le deuxième élément de contact et le câble (7) sont surveillées avec une unité de surveillance du dispositif de protection contre le courant de défaut (2) et/ou du système de déclenchement (6).
